# EUROPEAN PATENT APPLICATION

(11) **EP 2 918 209 A1**
(43) Date of publication of application: **16.09.2015**
(21) Application number: 13852455.8
(22) Date of filing: 11.11.2013
(51) Int. Cl.: A47J 43/18

(54) **HAM STAND**

(30) Priority: 12.11.2012 ES 201231741
(71) Applicant: Ferrer Algueta, Cesar Didi, 22600 Sabiñánigo Huesca (ES)
(72) Inventor: Ferrer Algueta, Cesar Didi, 22600 Sabiñánigo Huesca (ES)
(74) Representative: Lehmann Novo, Maria Isabel
(86) International application number: PCT/ES2013/000250
(87) International publication number: WO 2014/072546

(57) **Abstract**

The invention relates to a ham stand formed by a supporting structure comprising a base (1) and a column (2), the upper portion of the column (2) being provided with a spherical body (3) comprising a transverse cavity (18) containing fasteners (9) that can be used to press-clamp the hoof area of the ham (4). The spherical body (3) is secured with an anchor that can be released and clamped, allowing the spherical body (3) to be rotated like a ball joint and secured in any position during rotation.

## Description

### Technical sector

This invention is related with those devices known as ham stands, which are used to press-clamp hams in order to make them easier to slice by hand. The invention proposes a device of this type with a number of design characteristics that improve its function.

### Technical status

To be able to slice hams by hand in a suitable manner the ham has to be secured in such a way as to enable the slicing movements to be carried out both effectively and safely. This is because any unexpected movements of the ham can result in inaccurate slices and risks of the person doing the slicing accidentally cutting themselves.

In order to ensure that the process of slicing hams by hand is carried out under suitable conditions clamping devices known as ham stands are used. Over time a number of different designs have been developed in an attempt to achieve solutions that enable the hams to be firmly secured in the various positions that best favour the slicing movements.

However, the devices developed to perform this function fail to adequately combine effective press-clamping characteristics with making it easy to secure the hams and change their position so that they can be sliced as comfortably as possible by the user doing the slicing.

### The purpose of the invention

This invention proposes a ham stand that features a number of special characteristics in its construction that succeed in achieving an embodiment that provides beneficial functional characteristics that make it possible to secure the hams in a variety of selective positions.

This ham stand, which forms the purpose of the invention, consists of a support structure made up of a supporting base and a column, in the upper portion of which there is an opening within which a spherical body is mounted that is, in turn, traversed by a cylindrical cavity fitted with a number of fasteners attached using screws that enable them to move transversally said cavity. The spherical body is secured between a number of elastic circular fittings and includes a thrusting mechanism that enables this arrangement to be manually released and clamped and allows the spherical body to be rotated and then fixed in any position.

This provides a ham stand that enables hams to be securely held in place by way of the pressure exerted on the hoof area by the fasteners fitted inside the spherical body, with the result being that this arrangement anchors the ham totally safely and in a stable manner without the need for a second point of support; meanwhile, by loosening and tightening the thrusting mechanism that secures the spherical body it is possible to rotate the ham on its own axis and situate it in a horizontal position, in a vertical position or in angled positions in accordance with that which is most convenient for the easy and comfortable slicing thereof.

This means that hams can be press-clamped in an effective manner, thereby enabling them to be hand sliced safely and comfortably and making it possible to change the position of the ham quickly and simply and adapt it to the most convenient position in which to slice the different parts of the ham under the best conditions for the user.

The thrusting mechanism that secures the spherical body consists of a threaded rod that is fitted with a transversal drive bar that makes the action of loosening the spherical body in order to turn it and then to tightening it up again to secure it in the new desired position extremely easy and quick and enables that operation to be carried out by the person who is slicing the ham without any help from anybody else.

Due to all the aforementioned, the ham stand that forms the purpose of the invention is the result of a number of beneficial characteristics as regards the function for which it is designed, all of which set it apart and make it preferable with respect to the conventional devices used for the same purpose.

### Description of the figures

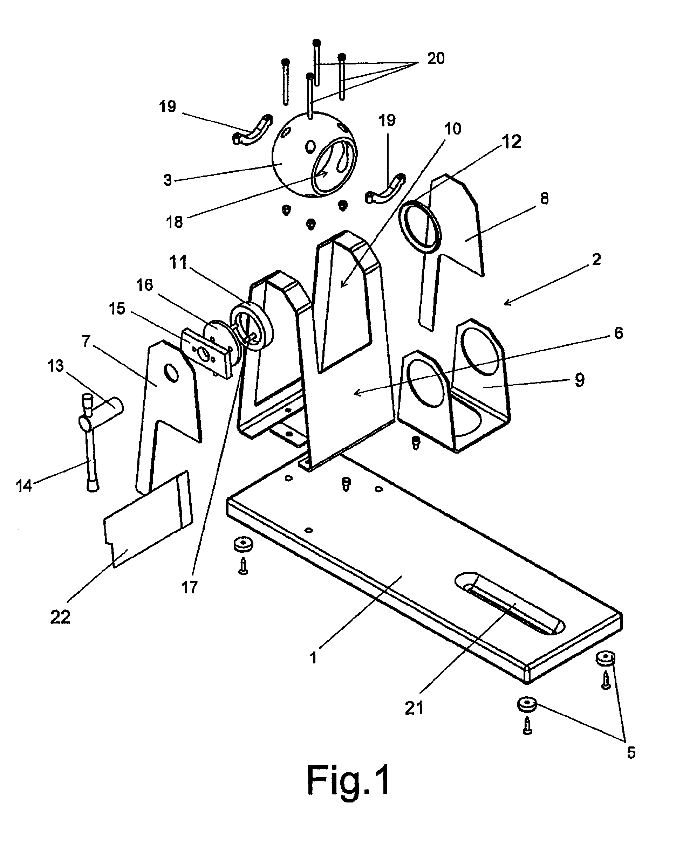

Figure 1 shows an exploded view of an exemplary embodiment of a ham stand in accordance with the purpose of the invention.

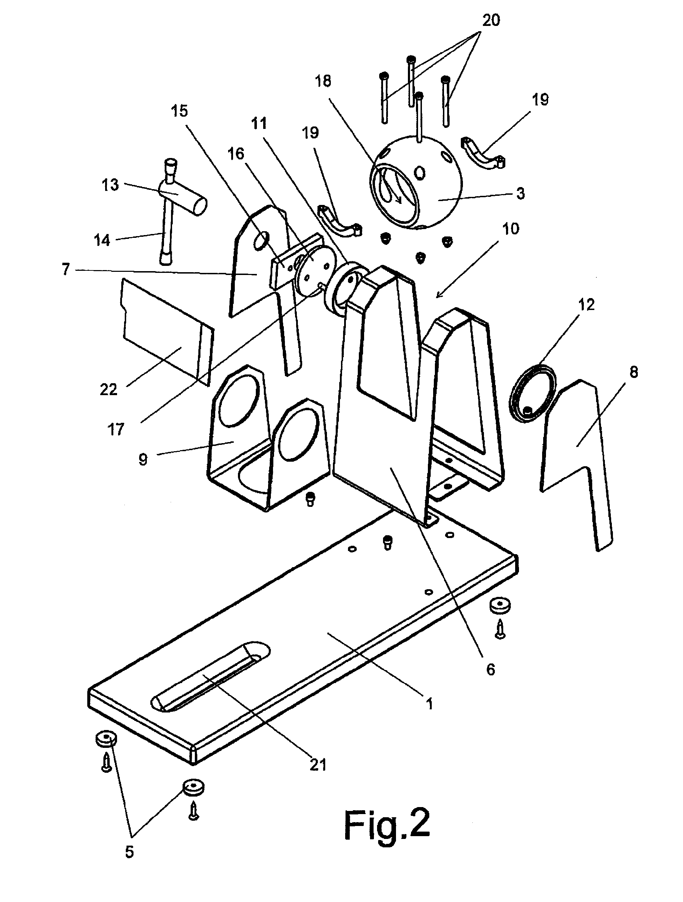

Figure 2 is an exploded view of the same ham stand seen from another position.

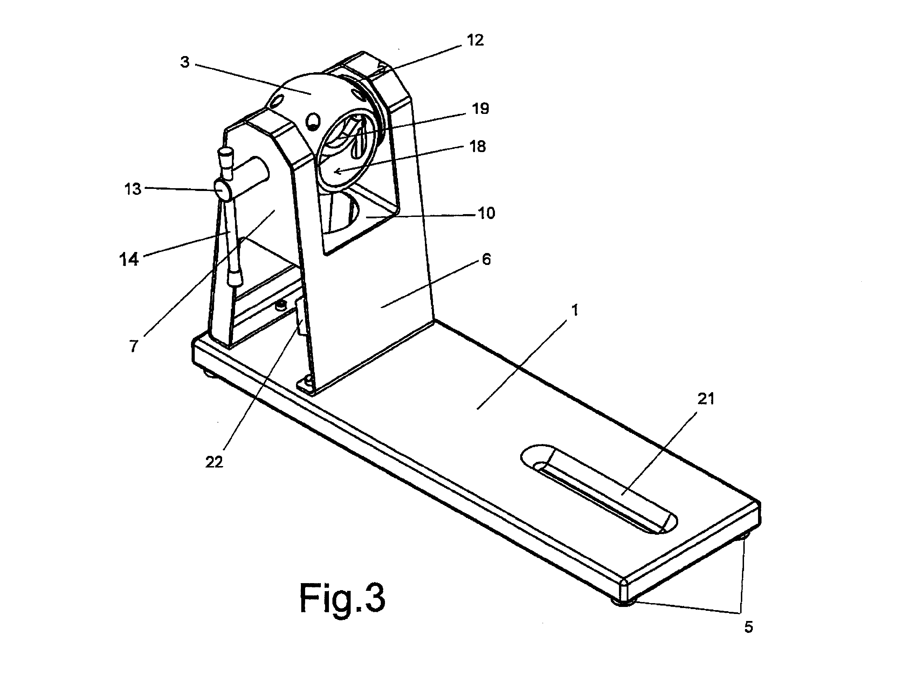

Figure 3 is a view of the assembled ham stand as seen from the same perspective as figure 1.

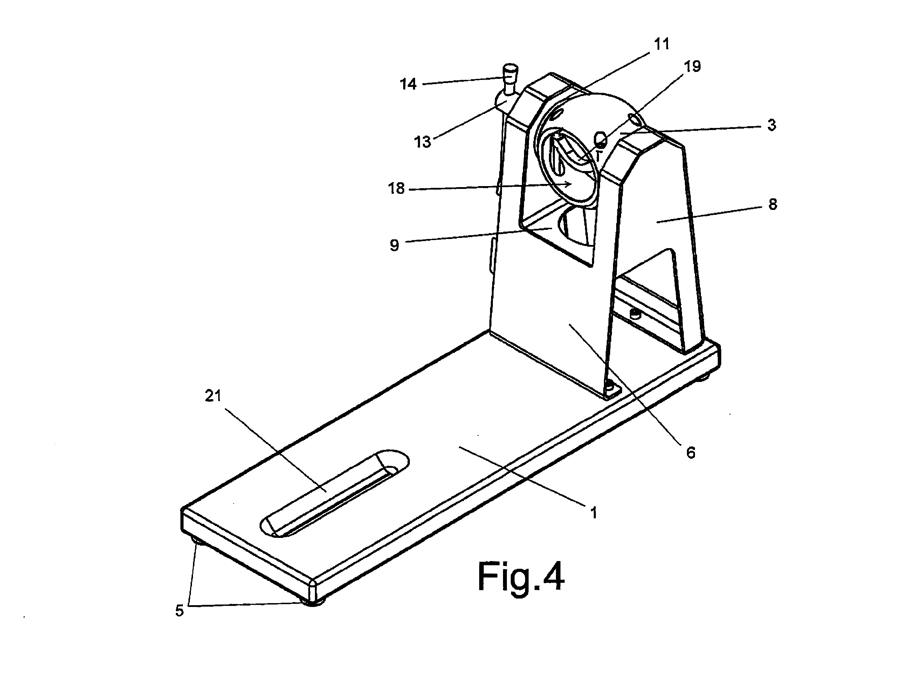

Figure 4 is a view of the assembled ham stand as seen from the same perspective as figure 2.

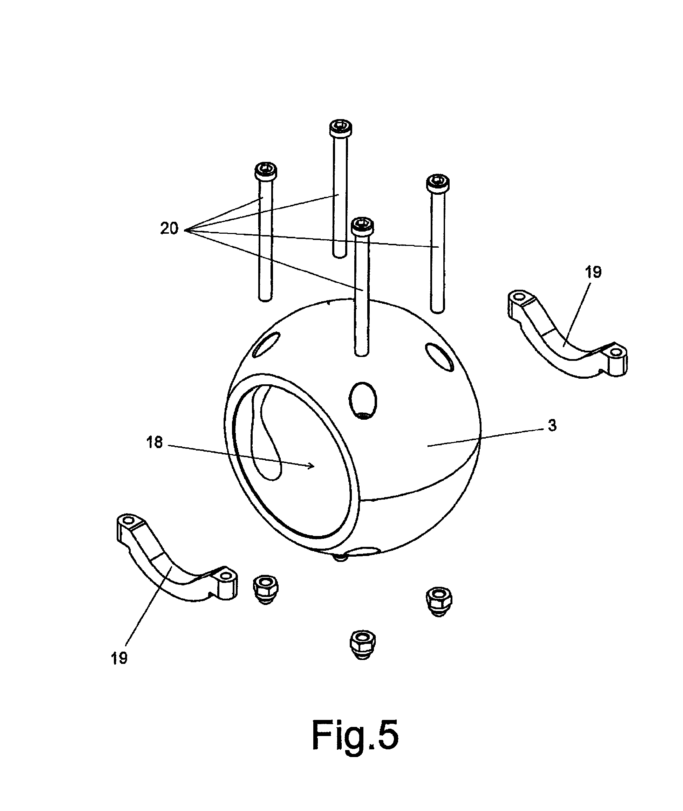

Figure 5 is an exploded view of the spherical body of the ham stand.

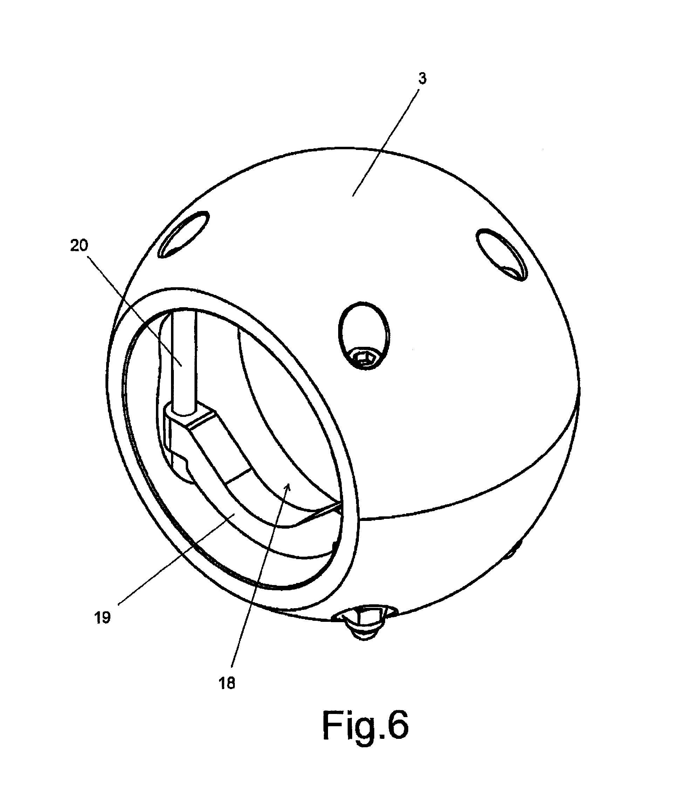

Figure 6 is a view of the assembled spherical body of the ham stand.
Figures 7, 8, 9 and 10 show some examples of the different positions in which a ham can be secured using the advocated ham stand.
Figures 11 and 12 show the ham stand attached to a vertical wall with a ham held in it. In the former the ham is shown in the vertical stand-by position, and in the latter it is seen in a horizontal position ready for slicing.

### Detailed description of the invention

The object of the invention is a ham stand consisting of a support structure made up of a base (1) and a column (2,), with the upper portion of the column (2) fitted with a spherical body (3) within which a ham (4) can be press-clamped so that it can been sliced by hand.

The base (1) is fitted with elastic pads (5) so that it can be safely rested on a table or other work surface; while the column (2) consists of metal plates (6, 7, 8 and 9) that form a rigid structure, in the upper portion of which there is a notch (10) into which the spherical body (3) fits, with this being held between elastic circular fittings (11 and 12), that relate to a thrusting mechanism that enables the anchor to be released and clamped to allow the spherical body (3) to be rotated like a ball joint and secured in any position during rotation.

The thrusting mechanism for loosening and tightening the hold on the spherical body (3) exerted by the elastic circular fittings (11 and 12) consists of a threaded rod (13) fitted with a transversal drive bar (14), and this threaded rod (13) passes through a fixed anchor nut (15) which is attached to one side of the structure of the column (2), the fixed anchor nut (15) of which is fitted with a moveable disk (16) that is axially guided by pins (17) and which rests against the elastic circular fitting (11) of one of the sides that hold the spherical body (3), while the other elastic circular fitting (12) on the other side rests against the opposite wall of the structure of the column (2), meaning that by rotating the threaded rod (13) in one direction the spherical body (3) is released and can be rotated like a ball joint between the elastic circular fittings (11 and 12), and by rotating the threaded rod (13) in the opposite direction to that used to release it the spherical body (3) is clamped and held securely in any position within its range of movement.

The spherical body (3) features a transverse cylindrical cavity (18) the inside of which is fitted with fasteners (19) held in place with screws (20) that can be turned from the exterior, meaning that by turning these screws (20) the fasteners (19) are moved in the transversal direction of the cavity (18).

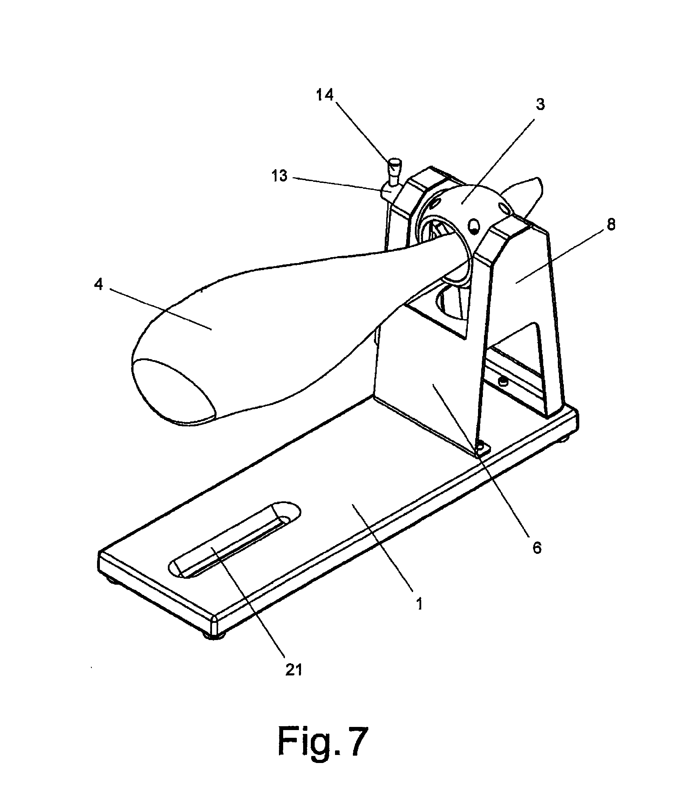

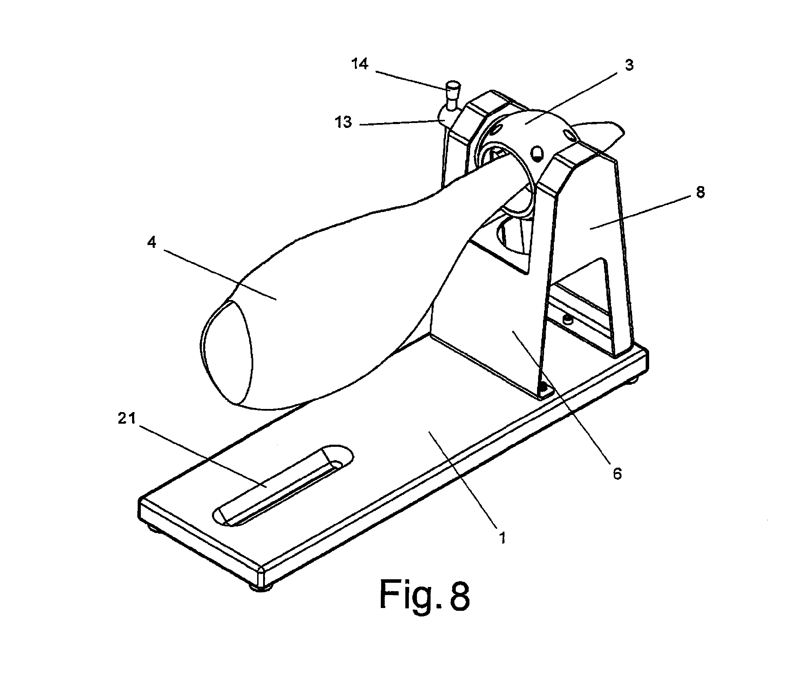

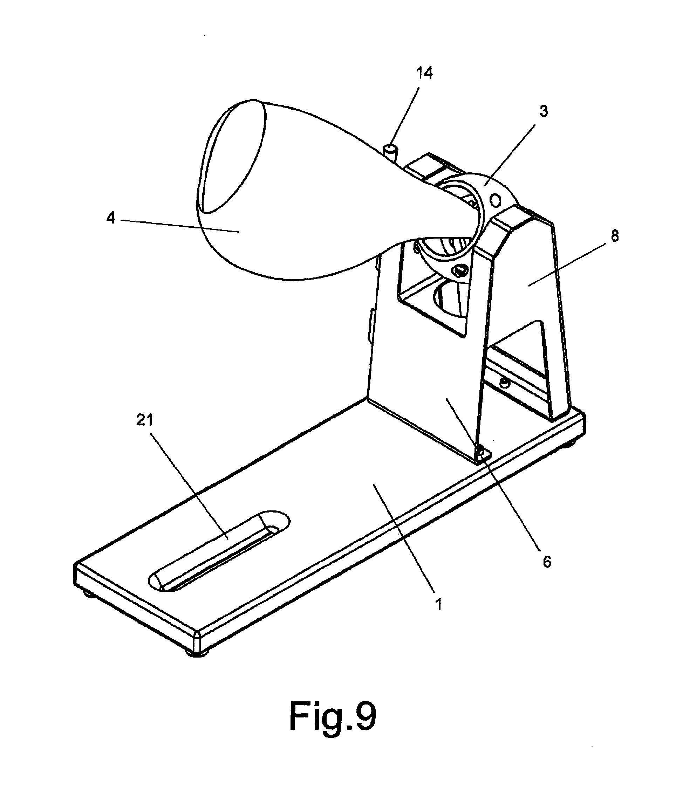

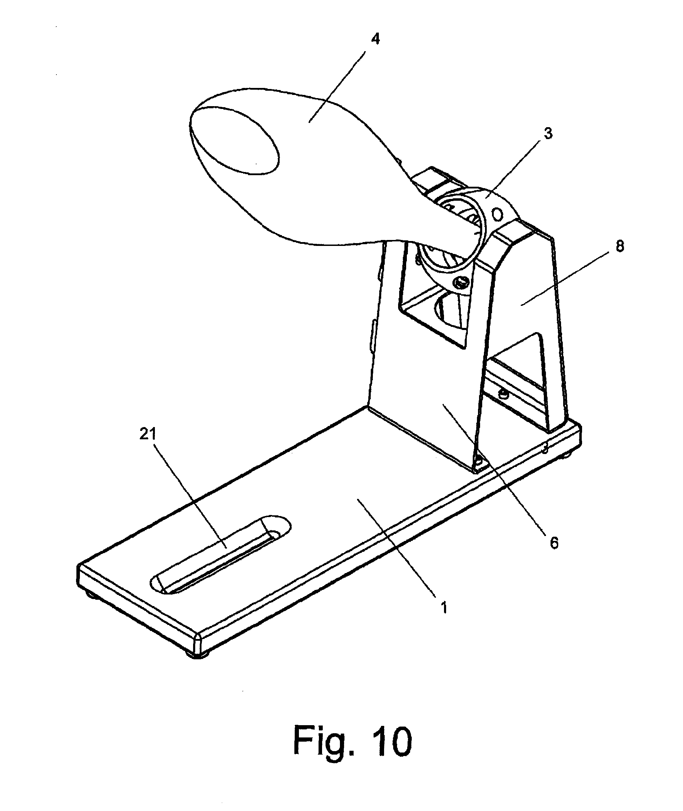

With the fasteners (19) in the release position, the hoof area of a ham (4) can be inserted into the cavity (18) and, by turning the screws (20) pressure is exerted on that area of the ham (4) by the fasteners (19), thereby ensuring that the ham (4) is securely held and, by rotating the spherical body (3) can be held in any position, either by rotating it on its own axis or tilting it, namely in a vertical position, a horizontal position or in angled positions, without the need to support the ham (4) on a second point or anchor, and the ham (4) can even be cantilevered as shown in figures 7 to 10 in order to make the slicing process as comfortable as possible.

The base (1) of the ham stand support structure is designed with an indentation (21) in the area directly beneath the hams (4) once they are held fast in the ham stand, with this indentation (21) serving not only as a collection point to catch any possible drips of fat released by the hams (4) while they are being held in the ham stand, but also as an additional support for holding the hams (4) place with the purpose of making them easier to slice once most of their meat has been removed, as this is when their natural joints are most prone to movement.

A plaque (22) showing instructions on how to use the ham stand and on how to hand slice a ham (4) can also be incorporated into the structure of the column (2), with the plan being to attach this plaque (22) magnetically to the support structure of the ham stand.

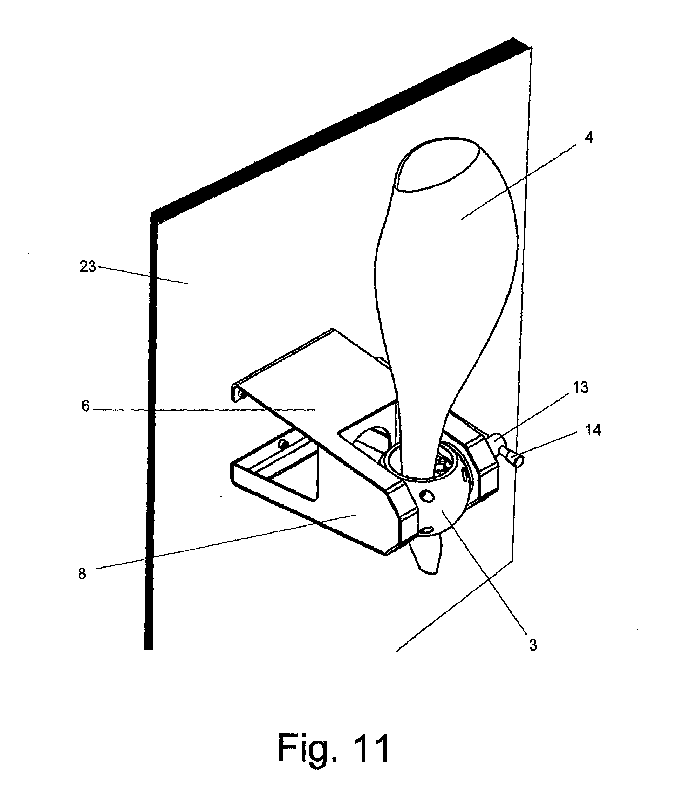

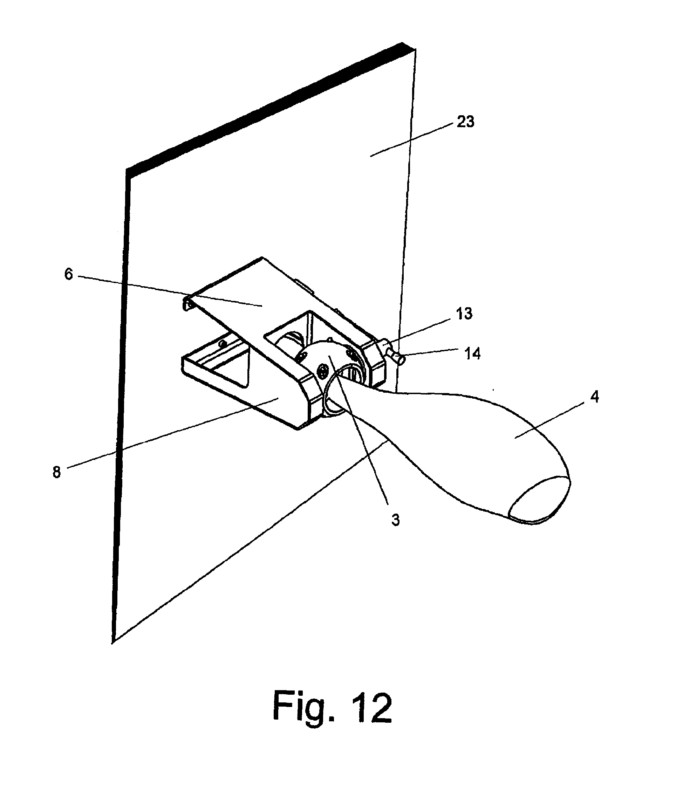

The fact that the ham (4) is securely held in the spherical body (3) and that this spherical body (3) can be rotated like a ball joint within the assembly mounted on the column (2) not only enables the ham stand to be used on a horizontal surface with its base (1), but also on a vertical wall (23) by mounting the column structure (2) directly to it, thereby offering the possibility of leaving the hams (4) in a vertical stand-by position when they are not being sliced so that they take up less space and not get in the way as shown in figure 11, or of cantilevering them down into the slicing positions, as can be seen in figure 12.

## Claims

1. Ham stand fitted with a rotary anchor for press-clamping and positioning a ham (4) for the hand slicing thereof **characterised by** consisting of a support structure formed by a base (1) and a column (2) with a spherical body (3) attached to the upper portion of the column (2) secured by way of an anchor that can be loosened and tightened to enable said spherical body (3) to rotate like a ball joint and to be secured in any position within its range of movement, while said spherical body (3) features a transverse cylindrical cavity (18) the inside of which is fitted with fasteners (19) that can be moved transversally within the aforementioned cavity (18) to secure the ham (4) by press-clamping the hoof area thereof.

2. A ham stand which, in accordance with the first claim, is **characterised by** the spherical body (3) secured between elastic circular fittings (11 and 12) which, in combination with a thrusting mechanism consisting of a threaded rod (13) that passes through a fixed anchor nut (15), axially drive a moveable disk (16) that rests against the elastic circular fitting (11) of one of the sides that hold the spherical body (3), while the other elastic circular fitting (12) on the other side rests against the opposite wall of the structure of the column (2).

3. A ham stand which, in accordance with the first claim, is **characterised by** the fasteners (19) fitted within the cavity (18) of the spherical body (3) which are secured using screws (20) that can be turned from the exterior of said spherical body (3).

4. A ham stand which, in accordance with the first claim, is **characterised by** the base (1) of the support structure including an indentation (21) that catches the drips of fat released by the hams (4) and ensures that the hams (4) are securely held when their natural joints begin to move.

5. A ham stand which, in accordance with the first claim, is **characterised by** the incorporation of a plaque (22) that is magnetically attached to the support structure and that shows instructions for use.
